# FASCICULE DE BREVET EUROPEEN

(11) **EP 0 493 177 B1**
(45) Date de publication et mention de la délivrance du brevet: **12.07.1995**
(21) Numéro de dépôt: 91403389.9
(22) Date de dépôt: 13.12.1991
(51) Int. Cl.: G02B 6/28, G02B 6/38, G02B 6/42

(54) **Dispositif de connexion optique et appareil de traitement de données muni de moyens de transmission optique**
Optische Verbindungseinrichtung und Datenverarbeitungsapparatur mit optischen Sendevorrichtungen
Optical connection device and data treatment apparatus with optical transmission means

(30) Priorité: 21.12.1990 FR 9016128
(43) Date de publication de la demande: 01.07.1992
(73) Titulaire: THOMSON-CSF, 75008 Paris (FR)
(72) Inventeur: Chazelas, Jean, F-92045 Paris la Défense (FR); Becker, Alain, F-92045 Paris la Défense (FR)
(74) Mandataire: Beylot, Jacques

(56) Documents cités:
- EP-A- 0 116 481
- EP-A- 0 234 981
- EP-A- 0 360 304
- WO-A-90/01176
- WO-A-90/02349
- WO-A-90/04835
- US-A- 4 169 001

## Description

L'invention se rapporte à un dispositif de connexion optique pour la transmission d'informations lumineuses ; elle concerne également, à titre d'application, un appareil de traitement de données muni de moyens de transmission optique mettant en oeuvre un tel principe de connexion.

Dans les installations de traitement de données où les informations sont traitées massivement en parallèle, il est de plus en plus nécessaire de disposer de lignes de transmission dites "bus", à haute performance, capables de transmettre plusieurs Gbits/s.

Seule l'optique est aujourd'hui capable d'assurer simultanément sur un grand nombre de liaisons, des débits supérieurs au Gbits/s, avec des interfaces de petite dimension et une faible consommation.

Le document de brevet européen 0 196 933 décrit un système permettant d'établir des liaisons optiques entre circuits d'un même appareil. Il nécessite une lame transparente formant panneau arrière du boîtier, des sources lumineuses et des récepteurs portés par les circuits imprimés et situés de préférence à proximité immédiate dudit panneau arrière. Ce dernier porte des éléments optiques diffractants et des éléments réflecteurs judicieusement placés pour transmettre la lumière entre un ou plusieurs émetteurs et un ou plusieurs récepteurs, en créant des réflexions multiples dans la lame transparente. Ce principe implique un certain trajet optique "dans l'air" en dehors de tout guide de lumière du type fibre optique.
Il est par ailleurs relativement contraignant pour ce qui concerne l'implantation des composants sur les circuits imprimés et le positionnement de ces derniers.

L'invention vise un concept différent dans lequel tout trajet optique est entièrement matérialisé par des guides de lumière avec, entre eux, des connexions optiques à haute performance, occasionnant un minimum de perte.

Dans cet ordre d'idée, il est connu par le brevet européen 0 0234 981 de réaliser un dispositif de connexion optique pour transmission d'informations lumineuses qui comporte un premier élément transparent rigide avec une extrémité de forme acérée, un second élément transparent pourvu d'une encoche dans laquelle se loge l'extrémité de forme acérée du premier élément et des moyens mécaniques de fixation pour appliquer à force et maintenir l'extrémité acérée du premier élément dans l'encoche du deuxième élément.

Un tel dispositif de connexion permet de réaliser une dérivation sur un câble optique. Mais il a l'inconvénient de nécessiter un bouchon de forme complémentaire à l'encoche si la dérivation n'est pas utilisée.

Il est aussi connu par les brevets européens 0 116 481 et 0 360 304 d'interposer un gel de silicone entre les deux faces terminales planes en aboutement de deux fibres optiques afin de réaliser une connexion optique.

De tels dispositifs de connexion optique ne permettent pas de réaliser une dérivation sur un câble optique.

Un but de l'invention est de proposer un nouveau dispositif de connexion optique, simple, à haute performance et économique, tant du point de vue du coût d'implantation que du point de vue du coût d'exploitation.

Dans cet esprit, l'invention concerne un dispositif de connexion optique pour transmission d'informations lumineuses, du type comportant au moins un premier élément rigide transparent avec une extrémité de forme acérée, au moins un second élément transparent et des moyens mécaniques de fixation pour appliquer à force et maintenir l'extrémité de forme acérée dudit premier élément contre ledit second élément.

Ce dispositif de connexion est remarquable en ce que le second élément transparent comporte au moins une partie en matériau transparent élastique et en ce que les moyens mécaniques de fixation sont adaptés pour appliquer à force et maintenir l'extrémité acérée du premier élément contre la partie en matériau transparent élastique du second élément.

Tous ces éléments sont de préférence en verre ou en matière plastique transparente pour ce qui concerne les parties rigides; le matériau élastique précité est un matériau adapté à la transmission de signaux optiques à base de silicone ou de plastique déformable tel qu'un thermoplastique du type élastomère silicone vulcanisant à chaud ou à froid utilisé notamment pour les lentilles de contact.

Un autre but de l'invention est d'appliquer le principe de connexion défini ci-dessus dans des architectures d'appareils de traitement de données (signal, informations ou images) comportant des moyens de transmission optique à débits importants, par exemple de l'ordre de plusieurs Gbits/s.

Un autre but de l'invention est d'assurer des liaisons optiques performantes, éventuellement démontables, entre des composants d'un même circuit et/ou des composants de circuits voisins.

Plus précisément, l'invention concerne un appareil de traitement de données avec des moyens de transmission optique pour la transmission d'informations lumineuses, comportant au moins un premier guide de lumière avec une extrémité de forme acérée en matériau rigide, au moins un second guide de lumière et des moyens mécaniques de fixation pour appliquer à force et maintenir ladite extrémité acérée du premier guide contre le second guide, les moyens de transmission optique étant remarquables en ce que le second guide de lumière comporte au moins un tronçon en matériau transparent élastique et en ce que les moyens mécaniques de fixation sont adaptés pour appliquer à force et maintenir l'extrémité acérée du premier guide contre le flanc du tronçon en matériau transparent élastique du second guide.

L'extrémité acérée dudit premier guide lumineux aura de préférence une forme de cône si le guide a une section cylindrique ou une forme dièdre si le guide a une section carrée ou rectangulaire. Cette dernière particularité permettra un changement de direction du trajet lumineux en recouvrant une face de ce dièdre d'un revêtement réfléchissant ou semi-réfléchissant.

Avantageusement, le dièdre de l'extrémité acérée du premier guide lumineux comporte deux facettes obliques délimitant une arête déportée latéralement, l'une des facettes venant dans le prolongement du premier guide lumineux et l'autre formant un renflement sur le côté du premier guide lumineux se terminant par un épaulement incliné.

L'invention sera mieux comprise et d'autres avantages de celle-ci apparaîtront plus clairement à la lumière de la description qui va suivre, donnée uniquement à titre d'exemple et faite en référence aux dessins annexés dans lesquels :
- la figure 1 est une vue schématique d'un dispositif de connexion optique conforme à l'invention ;
- la figure 2 est une vue schématique en coupe d'une partie d'un appareil de traitement de données équipé de moyens de transmission d'informations lumineuses munis de connexions conformes au principe de l'invention ;
- la figure 3 est une vue schématique en perspective d'une autre partie d'un tel appareil de traitement de données ;
- la figure 4 illustre schématiquement en perspective un sous-ensemble d'un tel appareil ; et
- la figure 5 illustre schématiquement en perspective un module de liaison destiné à être intercalé entre deux circuits d'un tel appareil.

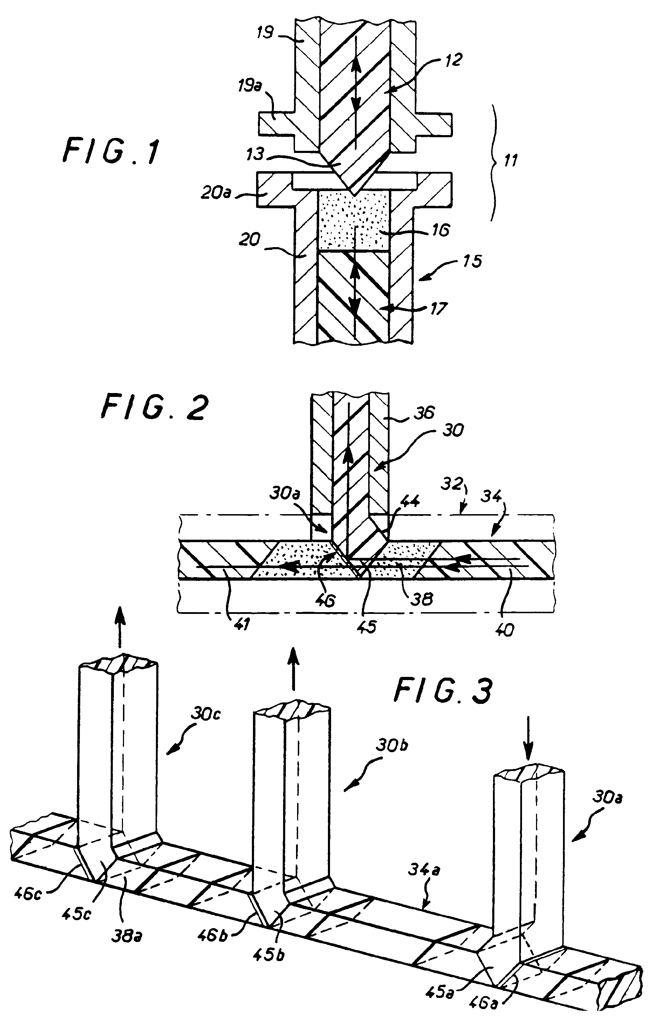

En se rapportant plus particulièrement à la figure 1, on a représenté un simple dispositif de connexion optique 11 pour la transmission d'informations lumineuses, incorporable dans tout système de traitement ou de transmission de données comportant au moins une ligne de transmission optique à grand débit d'information. Le dispositif de connexion permet donc de raccorder deux unités quelconques, non représentées, d'un tel système. Il comporte ici un premier élément rigide 12, en matière plastique transparente ou en verre, de section transversale circulaire, carrée ou rectangulaire, dont l'extrémité libre 13 a une forme acérée, par exemple un cône ou un dièdre suivant la forme de la section transversale de l'élément rigide 12. La forme de celui-ci en section transversale peut être différente de l'une de celles qui sont indiquées ci-dessus.

Le dispositif comporte en outre un second élément transparent 15, au moins en partie élastique. Plus précisément, dans l'exemple représenté , le second élément 15 se compose d'un autre élément rigide 17 du même type que l'élément 12 et d'une pastille 16 en matériau élastique transparent, située à son extrémité de raccordement. La pastille 16 est en contact avec l'élément rigide 17. Le premier élément rigide 12 est contenu dans une gaine opaque 19 sauf l'extrémité acérée 13 qui fait saillie au-delà de l'extrémité de cette gaine. La pastille 16 et l'élément 17 sont logés bout à bout dans une gaine opaque 20, la pastille affleurant au fond d'un évidement peu profond ménagé à l'extrémité de la gaine 20, conformé et dimensionné pour accueillir l'extrémité correspondante de la gaine 19. Cet agencement assure ainsi un positionnement correct des éléments de transmission optique. Le dispositif décrit ci-dessus est complété par des moyens mécaniques de fixation pour appliquer à force et maintenir l'extrémité 13 du premier élément 12 contre la pastille 16 en matériau élastique transparent. Dans l'exemple, ces moyens mécaniques de fixation sont matérialisés par des brides 19a, 20a, définies aux extrémités respectives des gaines 19, 20 et destinées à être assemblées l'une contre l'autre par tout moyen convenable non représenté. Il ressort clairement du dessin que lorsque les brides sont ainsi assemblées, l'extrémité acérée 13 pénètre dans la pastille 16. Les indices de réfraction des différents matériaux sont choisis pour assurer la transmission lumineuse sans déviation supplémentaire. La pastille 16 est en matériau à base de silicone , de plastique déformable, ou tout autre matériau élastique transparent de propriétés optiques adéquates. C'est par exemple un thermoplastique du type élastomère silicone vulcanisant à chaud ou à froid tel que ceux utilisés pour les lentilles de contact. La déformation par compression exercée sur cette pastille 16 par l'extrémité rigide acérée 83 a pour effet, d'engendrer une force réactive optimisant le contact avec cette extrémité acérée 13. Tous ces éléments, une fois assemblés, reconstituent un guide de lumière capable de transmettre des informations à très grand débit, de l'ordre de plusieurs Gbits/s.

Dans les exemples suivants, les dispositifs de connexion sont mis à profit pour opérer un changement d'orientation dans le trajet optique des informations lumineuses. Pour ce faire, l'élément rigide a une section carrée ou rectangulaire et son extrémité libre a la forme d'un dièdre. En outre, au moins l'une des faces de ce dièdre est couverte d'un revêtement réfléchissant ou semi-réfléchissant.

Plus précisément, en référence à la figure 2, on a représenté une partie d'un appareil de traitement de données quelconque, et notamment un premier guide lumière 30 raccordé à un circuit imprimé multicouches 32, lequel comporte, enfoui entre les couches, un second guide de lumière 34. Comme le guide de lumière 30 est agencé perpendiculairement au plan du circuit imprimé, les deux guides lumineux 30, 34 sont perpendiculaires entre eux. Ils sont à section carrée ou rectangulaire, A l'exception de sa portion d'extrémité 30a, le guide 30 est monté à l'intérieur d'une gaine opaque 36, ce qui n'est pas nécessaire pour le guide 34 enfoui dans le circuit imprimé. Ce dernier comporte un tronçon en matériau élastique transparent 38 assemblé à au moins un tronçon rigide, le montage étant assuré avec une légère compression dudit tronçon en matériau élastique transparent. Dans l'exemple représenté, le tronçon 38 est intercalé entre deux tronçons rigides 40, 41. Les faces de raccordement de ces tronçons sont de préférence inclinées par rapport à l'axe du guide, comme représenté.

Le premier guide de lumière 30 a une extrémité rigide acérée 30a qui pénètre dans le circuit 32 et qui est appliquée à force et maintenue dans le tronçon en matériau élastique transparent 38 du second guide de lumière 34. Cette extrémité rigide acérée 30a forme un dièdre 45 avec une arête qui est perpendiculaire au deuxième guide de lumière 34, déportée latéralement dans le prolongement de l'une des parois latérales du premier guide de lumière 30 et délimitée par deux facettes obliques symétriques. L'une de ces facettes obliques symétriques vient dans l'alignement de la section principale du premier guide de lumière 30 tandis que l'autre délimite un renflement latéral sur l'extrémité du premier guide de lumière 30 se terminant par un épaulement incliné 44.

L'épaulement incliné 44 qui termine le renflement latéral de l'extrémité 30a du premier guide de lumière 30 vient au contact d'une portée correspondante de la gaine opaque 36. Cela permet de reporter la force de répulsion exercée par le matériau élastique transparent 38 sur l'extrémité rigide acérée 30a, à l'extrémité de la gaine opaque qui est équipée d'une bride analogue à la bride 19a de la figure 1, permettant sa fixation par vis au circuit imprimé 32.

La facette oblique qui vient dans l'alignement de la section principale du premier guide de lumière 30 porte un revêtement réfléchissant ou semi-réfléchissant 46 et assure, par réflexion et changement de direction , un passage du faisceau lumineux du premier guide de lumière 30 au deuxième 34 ou inversement, tandis que la facette oblique déportée latéralement sur l'extrémité du premier guide de lumière diminue les réflexions parasites en les renvoyant sur les bords du matériau élastique transparent et non dans son axe.

Si le revêtement 46 est totalement réfléchissant, la quasi-totalisé du faisceau lumineux passe du guide 30 au guide 34 ou réciproquement. Si le revêtement est semi-réfléchissant,le faisceau peut se "partager" entre plusieurs guides. A titre d'exemple non limitatif, la figure 3 montre un agencement de liaison entre un guide "émetteur" 30a relié à une source d'informations lumineuses et deux guides "récepteurs" 30b, 30c reliés à des récepteurs différents. Ces trois guides, dont les extrémités sont en forme de dièdre rigide, sont connectés à même guide 34a (par exemple enfoui dans un circuit imprimé multicouches), le dièdre de chaque guide 30 étant engagé dans un tronçon de matériau élastique transparent 38a, par exemple à base de silicone ou de plastique déformable tel qu'un thermoplastique du type élastomère silicone utilisé notamment pour les lentilles de contact. Le dièdre 45a du guide émetteur 30a comporte une face munie d'un revêtement 46a, ici totalement réfléchissant, qui renvoie la lumière en direction des deux autres dièdres. Le dièdre 45b du guide récepteur 30b, le plus proche, comporte une face munie d'un revêtement semi-réfléchissant 46b de façon qu'une partie du faisceau lumineux parvienne jusqu'au dièdre 45c du guide récepteur 30c. Ce dièdre est muni, sur l'une de ses faces d'un revêtement 46c, qui peut être totalement réfléchissant ou au contraire semi-réfléchissant si d'autres récepteurs sont couplés au guide 34a.

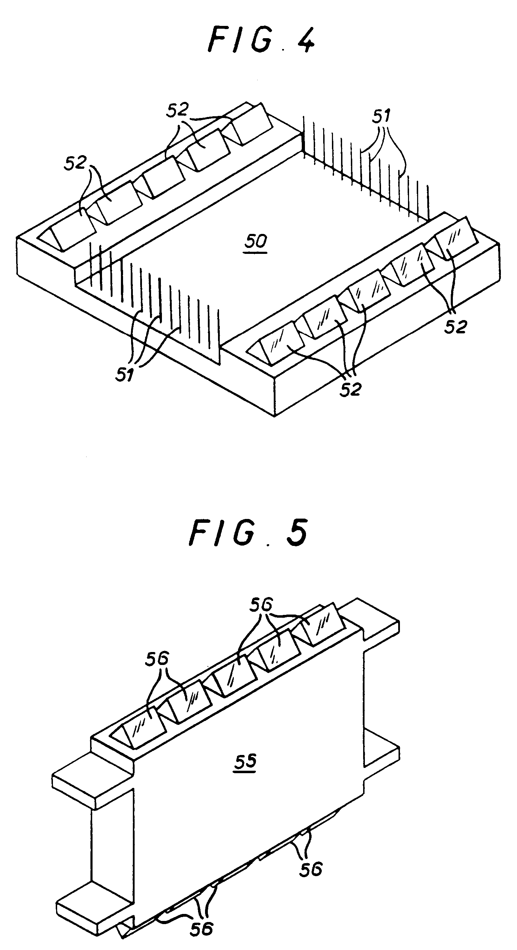

La figure 4 illustre un sous-ensemble hybride 50 pouvant constituer une partie d'un appareil de traitement de données conforme à l'invention. Un tel sous-ensemble peut regrouper des circuits électroniques de traitement, des processeurs et des mémoires, etc..., accessibles par des rangées de contacts électriques 51. Selon l'invention, il comporte aussi des premier et/ou second guides lumineux conformes à la description ci-dessus et qui sont ici avantageusement agencés de façon à former au moins une rangée de contacts optiques 52 pour liaison avec d'autres sous-ensembles. Dans l'exemple représenté, le sous-ensemble 50 comporte deux rangées de contacts optiques, ceux-ci étant constitués par des extrémités en dièdre, du type décrit précédemment.

La figure 5 représente un autre composant conforme au principe de l'invention. Il s'agit d'un module de liaison 55 destiné à être monté entre des circuits ou sous ensembles voisins. Dans l'exemple, ce module comporte une pluralité de premier et/ou second guides lumineux agencés de préférence parallèlement entre eux. Ces guides sont emprisonnés dans un bloc surmoulé à l'exception de leurs extrémités 56, ici en forme de dièdre.

Le genre de connexion optique qui vient d'être décrit par déformation réversible d'un matériau élastique transparent au moyen d'un élément optique rigide de forme acérée présente l'intérêt d'être démontable et d'offrir la possibilité de remplacer l'élément optique rigide de forme acérée pour en modifier, éventuellement, les caractéristiques de couplage (forme biseautée ou indice de réflexion de l'extrémité) ou en assurer la maintenance. La forme préconisée permet d'adapter de manière optimale le couplage entre les deux éléments optiques en conservant une section efficace égale à la section du barreau.

## Revendications

1. Dispositif de connexion optique pour transmission d'informations lumineuses, comportant au moins un premier élément transparent rigide (12 ; 30 ; 30a, 30b, 30c) avec une extrémité (13 ; 30a) de forme acérée, au moins un second élément transparent (15, 16 ; 34, 38 ; 34a, 38a), et des moyens mécaniques de fixation (19a, 20a) pour appliquer à force et maintenir ladite extrémité acérée (13, 30a) dudit premier élément contre ledit second élément, caractérisé en ce que ledit second élément transparent (15, 16 ; 34, 38 ; 34a, 38a) comporte au moins une partie (16 ; 38 ; 38a) en matériau transparent élastique, et en ce que lesdits moyens mécaniques de fixation (19a, 20a) sont adaptés pour appliquer à force et maintenir l'extrémité acérée (13, 30a) dudit premier élément contre ladite partie en matériau transparent élastique dudit second élément.

2. Dispositif selon la revendication 1, caractérisé en ce que ladite partie en matériau transparent élastique (16) dudit second élément est en un matériau thermoplastique de type élastomère silicone.

3. Dispositif selon la revendication 1, caractérisé en ce que ledit premier élément rigide (30) a une section carrée ou rectangulaire, et une extrémité acérée en forme de dièdre (45) l'une au moins des faces de ce dièdre étant recouverte d'un revêtement réfléchissant ou semi-réfléchissant (46).

4. Dispositif selon la revendication 3, caractérisé en ce que l'extrémité acérée en forme de dièdre (45) du premier élément rigide (30) présente une arête qui est délimitée par deux facettes obliques et qui est déportée latéralement par rapport à l'axe dudit premier élément rigide (30), l'une des facettes venant dans le prolongement dudit premier élément rigide (30) tandis que l'autre forme un renflement sur le côté de l'extrémité dudit premier élément rigide (30) se terminant par un épaulement incliné (44).

5. Dispositif selon la revendication 4, caractérisé en ce que le premier élément rigide (30) est revêtu d'une gaine opaque (36) pourvue à son extrémité desdits moyens mécaniques de fixation et d'une portée coopérant avec l'épaulement incliné (44) pour transférer, à l'extrémité de la gaine opaque et donc aux moyens mécaniques de fixation, la force de répulsion exercée sur l'extrémité acérée dudit premier élément rigide par ledit tronçon en matériau élastique transparent du second élément (34).

6. Appareil de traitement de données comportant des moyens de transmission optique pour la transmission d'informations lumineuses, lesdits moyens de transmission optique comportant au moins un premier guide de lumière (30 ; 30a, 30b, 30c) avec une extrémité (13 ; 30a) de forme acérée en matériau rigide, au moins un second guide de lumière (34, 38 ; 34a, 38a), et des moyens mécaniques de fixation (19a, 20a) pour appliquer à force et maintenir ladite extrémité acérée (30a) dudit premier guide contre ledit second guide, caractérisé en ce que ledit second guide de lumière (34, 38 ; 34a, 38a) comporte au moins un tronçon (38 ; 38a) en matériau transparent élastique, et en ce que lesdits moyens mécaniques de fixation (19a, 20a) sont adaptés pour appliquer à force et maintenir ladite extrémité acérée (30a) dudit premier guide contre un flanc dudit tronçon (38 ; 38a) en matériau transparent élastique dudit second guide.

7. Appareil de traitement de données selon la revendication 6, caractérisé en ce qu'au moins l'un des guides de lumière précités est enfoui dans une structure de circuit imprimé multicouches (32).

8. Appareil de traitement de données selon la revendication 6, caractérisé en ce que ledit second guide de lumière comporte un tronçon en matériau élastique transparent (38), assemblé à au moins un tronçon rigide (40), le montage étant assuré avec une légère compression dudit tronçon en matériau élastique transparent.

9. Appareil de traitement de données selon la revendication 6, caractérisé en ce que de tels guides sont à section carrée ou rectangulaire, I'extrémité acérée en matériau rigide du premier guide étant en forme de dièdre (45) avec une face au moins recouverte d'un revêtement réfléchissant ou semi-réfléchissant (46).

10. Appareil de traitement de données selon la revendication 9, caractérisé en ce que l'extrémité rigide acérée en forme de dièdre (45) du premier guide de lumière (30) présente une arête qui est délimitée par deux facettes obliques et qui est déportée latéralement par rapport à l'axe du premier guide de lumière (30), l'une des facettes venant dans le prolongement du premier guide de lumière (30) tandis que l'autre forme un renflement sur le coté de l'extrémité dudit premier guide de lumière (30) se terminant par un épaulement incliné.

11. Appareil de traitement de données selon la revendication 10 caractérisé en ce que le premier guide de lumière (30) est revêtu d'une gaine opaque (36) pourvue à son extrémité des dits moyens mécaniques de fixation et d'une portée coopérant avec l'épaulement incliné (44) pour transférer, à l'extrémité de la gaine opaque (36) et donc aux dits moyens mécaniques de fixation , la force de répulsion exercée sur l'extrémité acérée du premier guide de lumière (30) par le dit tronçon en matériau élastique transparent du second guide de lumière (34).

12. Appareil de traitement de données selon l'une des revendications 6 à 11, caractérisé en ce qu'il comporte en outre au moins un sous-ensemble hybride (50) muni de premiers et/ou seconds guides de lumière précités agencés en au moins une rangée d'éléments de contact optique (52), pour des liaisons avec d'autres sous-ensembles.

13. Appareil de traitement de données selon l'une des revendications 6 à 11, caractérisé en ce qu'il comporte en outre au moins un module de liaison (55) entre circuits ou sous-ensembles voisins, comportant une pluralité de premiers et/ou seconds guides de lumière précités, agencés de préférence parallèlement entre eux.

## Patentansprüche

1. Optische Verbindungsvorrichtung zum Übertragen von Lichtinformationen mit wenigstens einem ersten starren transparenten Element (12; 30; 30a, 30b, 30c) mit einem spitz zulaufenden Ende (13; 30a), wenigstens einem zweiten transparenten Element (15, 16; 34, 38; 34a, 38a) und mechanischen Befestigungsmitteln (19a, 20a) zum Anlegen einer Kraft und Halten des ersten spitz zulaufenden Endes (13, 30a) des ersten Elements gegen das zweite Element, dadurch gekennzeichnet, daß das zweite transparente Element (15, 16; 34, 38; 34a, 38a) wenigstens einen Teil (16; 38; 38a) aus elastischem transparenten Material aufweist und daß die mechanischen Befestigungsmittel (19a, 20a) unter Krafteinwirkung das spitz zulaufende Ende (13, 30a) des ersten Elements gegen den Teil aus tranparentem elastischen Material des zweiten Elements halten können.

2. Vorrichtung nach Anspruch 1, dadurch gekennzeichnet, daß der Teil aus transparentem elastischen Material (16) des zweiten Elements aus einem thermoplastischen Material vom Typ eines Silikonelastomers ist.

3. Vorrichtung nach Anspruch 1, dadurch gekennzeichnet, daß das erste starre Element (30) einen quadratischen oder rechteckigen Querschnitt hat und ein spitz zulaufendes Ende in Form eines Dieders (45) aufweist, wobei wenigstens eine der Flächen dieses Dieders mit einer reflektierenden oder. halbreflektierenden Beschichtung (36) überzogen ist.

4. Vorrichtung nach Anspruch 3, dadurch gekennzeichnet, daß das spitz zulaufende Ende in Form eines Dieders (45) des ersten starren Elements (30) eine Kante aufweist, die von zwei schrägen Facetten begrenzt wird und die bezüglich der Achse des ersten starren Elements (30) seitlich versetzt ist, wobei eine der Facetten in der Verlängerung des ersten starren Elements (30) verläuft, während die andere auf der Seite des Endes des ersten starren Elements (30) eine Ausbauchung bildet, die mit einer schrägverlaufenden Schulter (44) endet.

5. Vorrichtung nach Anspruch 4, dadurch gekennzeichnet, daß das erste starre Element (30) mit einem lichtundurchlässigen Mantel (36) überzogen ist, der an seinem Ende mit mechanischen Befestigungsmittel und einer Anschlagfläche versehen ist, die mit der schräg geneigten Schulter (44) zusammenwirkt, um auf das Ende des lichtundurchlässigen Mantels und somit auf die mechanischen Befestigungsmittel die Rückstellkraft zu übertragen, die auf das spitz zulaufende Ende des ersten starren Elements durch den Teil aus elastischem transparenten Material des zweiten Elements (34) ausgeübt wird.

6. Datenverarbeitungsgerät mit optischen Übertragungsmitteln zum Übertragen von Lichtinformationen, wobei die optischen Übertragungsmittel wenigstens einen ersten Lichtleiter (30; 30a, 30b, 30c) mit einem spitz zulaufenden Ende (13; 30a) aus starrem Material, wenigstens einen zweiten Lichtleiter (34, 38; 34a, 38a) sowie mechanische Befestigungsmittel (19a, 20a) zum Ausüben einer Kraft und Halten des spitz zulaufenden Endes (30a) des ersten Lichtleiters gegen den zweiten Lichtleiter aufweisen, dadurch gekennzeichnet, daß der zweite Lichtleiter (34, 38; 34a, 38a) wenigstens einen Abschnitt (38; 38a) aus transparentem elastischen Material enthält und daß die mechanischen Befestigungsmittel (19a, 20a) unter Krafteinwirkung das spitz zulaufende Ende (30a) des ersten Lichtleiters gegen eine Flanke des Abschnitts (38; 38a) aus transparentem elastischen Material des zweiten Lichtleiters halten können.

7. Datenverarbeitungsgerät nach Anspruch 6, dadurch gekennzeichnet, daß wenigstens einer der vorgenannten Lichtleiter in eine Struktur einer mehrlagigen gedruckten Schaltung (32) eingebaut ist.

8. Datenverarbeitungsgerät nach Anspruch 6, dadurch gekennzeichnet, daß der zweite Lichtleiter einen Abschnitt (38) aus transparentem elastischen Material enthält, der mit wenigstens einem starren Abschnitt (40) zusammengebaut ist, wobei die Befestigung mit einem leichten Zusammendrücken des Abschnitts aus transparentem elastischen Material gewährleistet wird.

9. Datenverarbeitungsgerät nach Anspruch 6, dadurch gekennzeichnet, daß die Lichtleiter einen quaratischen oder rechtwinkligen Querschnitt haben und das spitz zulaufende Ende aus starrem Material des ersten Lichtleiters die Form eines Dieders (45) hat, bei dem wenigstens eine Fläche mit einem reflektierenden oder halbreflektierenden Überzug (46) überzogen ist.

10. Datenverarbeitungsvorrichtung nach Anspruch 9, dadurch gekennzeichnet, daß das spitz zulaufende starre Ende in Form des Dieders (45) des ersten Lichtleiters (30) eine Kante aufweist, die durch zwei schrägverlaufende Facetten begrenzt ist und die seitlich bezüglich der Achse des ersten Lichtleiters (30) versetzt ist, wobei eine der Facetten in der Verlängerung des ersten Lichtleiters (30) liegt, während die andere auf der Seite des Endes des ersten Lichtleiters eine Ausbauchung bildet, die mit einer schrägverlaufenden Schulter endet.

11. Datenverarbeitungsvorrichtung nach Anspruch 10, dadurch gekennzeichnet, daß der erste Lichtleiter (30) mit einem lichtundurchlässigen Mantel (36) überzogen ist, der an seinem Ende mit mechanischen Befestigungsmitteln und einer Anschlagfläche versehen ist, die mit der schrägverlaufenden Schulter (44) zusammenwirkt, um auf das Ende des lichtundurchlässigen Mantels (36) und somit auf die mechanischen Befestigungsmittel die Rückstellkraft zu übertragen, die von dem Abschnitt aus transparentem elastischen Material des zweiten Lichtleiters (34) auf das spitz zulaufende Ende des ersten Lichtleiters (30) ausgeübt wird.

12. Datenverarbeitungsgerät nach einem der Ansprüche 6 bis 11, dadurch gekennzeichnet, daß es ferner wenigstens eine Hybrid-Unterbaugruppe (50) enthält, die mit ersten und/oder zweiten vorgenannten Lichtleitern versehen ist, die wenigstens in einer Reihe optischer Kontaktelemente (52) für Verbindungen mit anderen Unterbaugruppen angeordnet sind.

13. Datenverarbeitungsgerät nach einem der Ansprüche 6 bis 11, dadurch gekennzeichnet, daß es ferner wenigstens einen Verbindungsmodul (55) zwischen benachbarten Schaltungen oder Unterbaugruppen aufweist, die mehrere erste und/oder zweite vorgenannte Lichtleiter enthalten, die vorzugsweise parallel zueinander angeordnet sind.

## Claims

1. Optical connection device for transmission of light information, comprising at least one first transparent rigid element (12; 30; 30a, 30b, 30c) with a pointed end (13; 30a), at least one second transparent element (15, 16; 34, 38; 34a, 38a), and mechanical fixing means (19a, 20a) for forcibly applying and holding the said pointed end (13, 30a) of the said first element against the said second element, characterized in that the said second transparent element (15, 16; 34, 38; 34a, 38a) includes at least a part (16; 38; 38a) made of transparent elastic material, and in that the said mechanical fixing means (19a, 20a) are designed forcibly to apply and to hold the pointed end (13, 30a) of the said first element against the said part made of transparent elastic material of the said second element.

2. Device according to Claim 1, characterized in that the said part made of transparent elastic material (16) of the said second element is made of a thermoplastic material of the silicon elastomer type.

3. Device according to Claim 1, characterized in that the said first rigid element (30) has a square or rectangular cross-section, and a pointed end in the shape of a dihedron (45), at least one of the faces of this dihedron being covered by a reflecting or semi-reflecting coating (46).

4. Device according to Claim 3, characterized in that the pointed end in the shape of a dihedron (45) of the first rigid element (30) exhibits a ridge which is delimited by two oblique facets and which is offset laterally with respect to the axis of the said first rigid element (30), one of the facets coming into the extension of the said first rigid element (30) while the other forms the swelling on the side of the end of the said first rigid element (30) terminating in an inclined shoulder (44).

5. Device according to Claim 4, characterized in that the first rigid element (30) is coated with an opaque sheath (36) provided at its end with the said mechanical fixing means and with a bearing face interacting with the inclined shoulder (44) in order to transfer, to the end of the opaque sheath and thus to the mechanical fixing means, the repulsion force exerted on the pointed end of the said first rigid element by the said segment, made of transparent elastic material, of the second element (34).

6. Data processing apparatus comprising optical transmission means for transmission of light information, the said optical transmission means comprising at least one first light guide (30; 30a, 30b, 30c) with a pointed end (13; 30a) made of rigid material, at least one second light guide (34, 38; 34a, 38a), and mechanical fixing means (19a, 20a) for forcibly applying and holding the said pointed end (30a) of the said first guide against the said second guide, characterized in that the said second light guide (34, 38; 34a, 38a) comprises at least one segment (38; 38a) of transparent elastic material, and in that the said mechanical fixing means (19a, 20a) are designed forcibly to apply and to hold the said pointed end (30a) of the said first guide against a side of the said segment (38; 38a) made of transparent elastic material of the said second guide.

7. Data processing apparatus according to Claim 6, characterized in that at least one of the abovementioned light guides is buried in a structure of a multi-layer printed circuit (32).

8. Data processing apparatus according to Claim 6, characterized in that the second light guide comprises a segment made of transparent elastic material (38), assembled with at least one rigid segment (40), the mounting being carried out with a slight compression of the said segment made of transparent elastic material.

9. Data processing apparatus according to Claim 6, characterized in that such guides have a square or rectangular cross-section, the pointed end, made of rigid material, of the first guide being in the shape of a dihedron (45) with at least one face covered by a reflecting or semi-reflecting coating (46).

10. Data processing apparatus according to Claim 9, characterized in that the pointed rigid end in the shape of a dihedron (45) of the first light guide (30) exhibits a ridge which is delimited by two oblique facets and which is offset laterally with respect to the axis of the first light guide (30), one of the facets coming into the extension of the first light guide (30) while the other forms a swelling on the side of the end of the said first light guide (30) terminating in an inclined shoulder.

11. Data processing apparatus according to Claim 10, characterized in that the first light guide (30) is coated with an opaque sheath (36) provided at its end with the said mechanical fixing means and with a bearing face interacting with the inclined shoulder (44) in order to transfer, to the end of the opaque sheath (36) and thus to the said mechanical fixing means, the repulsion force exerted on the pointed end of the first light guide (30) by the said segment, made of transparent elastic material, of the second light guide (34).

12. Data processing apparatus according to one of Claims 6 to 11, characterized in that it further comprises at least one hybrid sub-assembly (50) fitted with first and/or second abovementioned light guides arranged in at least one row of optical contact elements (52) for linking with other sub-assemblies.

13. Data processing apparatus according to one of Claims 6 to 11, characterized in that it further comprises at least one link module (55) between neighbouring circuits or sub-assemblies, comprising a plurality of first and/or second abovementioned light guides arranged, preferably, mutually parallel.
